(19) Europäisches Patentamt
European Patent Office
Office européen des brevets

(11) **EP 1 765 000 A2**

## (12) EUROPEAN PATENT APPLICATION

(43) Date of publication:
**21.03.2007 Bulletin 2007/12**

(51) Int Cl.:
***H04N 1/393*** (2006.01)

(21) Application number: **06119786.9**

(22) Date of filing: **30.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.08.2005 JP 2005252362**

(71) Applicant: **MATSUSHITA ELECTRIC INDUSTRIAL CO., LTD.**
**Kadoma-shi, Osaka 571-8501 (JP)**

(72) Inventors:
• **Ishii, Hideki**
**Osaka**
**Osaka 540-6319 (JP)**

• **Akiyama, Toshihide**
**Osaka**
**Osaka 540-6319 (JP)**
• **Hirai, Makoto**
**Osaka**
**Osaka 540-6319 (JP)**
• **Shimada, Taiji**
**Osaka**
**Osaka 540-6319 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

### (54) Image Data Processing Device

(57) An image data processing device for scaling up or down input image data and outputting output image data includes a first image processing section for converting the input image data with a first resolution into intermediate image data with a second resolution, and a second image processing section for converting the intermediate image data into the output image data with a third resolution.

## FIG.1

**Description**

**BACKGROUND OF THE INVENTION**

Field of the Invention

The present invention relates to image data processing devices applicable, e.g., to still image recording and playback devices, such as digital cameras and camera cell phones, in which image data is encoded and decoded.

Description of the Related Art

Still image recording and playback devices, typified by recent digital cameras and camera cell phones, have rapidly become popular, and the quality of images provided by those devices bas been improving with each passing year. Today, still image recording and playback devices capable of dealing with still images with 5 million or more pixels far beyond 1 million pixels are becoming widespread.

In general, such still image recording and playback devices employ JPEG compression technology so as to efficiently deal with large amounts of data. For example, image data input from a camera is subjected to data compression processing through an encoding process and the compressed data is stored in a recording medium in the digital camera. And the still image data stored in the recording medium, such as a memory card and a hard disk, is subjected to decompression processing through a decoding process performed by the still image recording and playback device and then the obtained image is displayed on a liquid crystal monitor or other display device.

A JPEG image stored in a recording medium is subjected to a decoding process and the obtained image is displayed on a display device in the following manner. In a case where the size of the stored JPEG image is large, the image size is reduced to a size appropriate for display, and then the size-reduced image is displayed. In a case where a thumbnail image is displayed, the size of the JPEG image data stored in the recording medium is likewise reduced to a thumbnail image size, before the image is displayed.

There is a known technique (disclosed in Japanese Laid-Open Publication No. 2000-59612, for example) for generating a thumbnail image from a JPEG image stored in a recording medium and displaying the generated thumbnail image. In the known technique, in JPEG decoding processing on the image stored in the recording medium, a DC component and an AC component of the image data are separated so as to extract only the DC component. And only the extracted DC component is subjected to the JPEG decoding processing and to inverse quantization processing, and thereafter, the obtained data is resized to a thumbnail image size and the thumbnail-sized image is output and displayed.

Also, on the decoded and displayed JPEG image, a user can readily perform zoom processing for scaling up or down a specific area of the image and processing such as rotation processing. At this time, in response to a request for zoom processing, rotation processing, and the like designated by the user, a typical still image recording and playback device performs the decoding and processing of the JPEG image stored in the recording medium again and displays the obtained image.

Also, when an image input by the camera is stored in the recording medium, a thumbnail image may be generated and stored together. In this case, filtering processing is performed to resize (scale down) the image input by the camera to the size of the thumbnail image to be generated, and then display processing, processing for subjecting the resized image to JPEG encoding processing and for storing the encoded image in the recording medium, or other processing is performed.

The conventional still image recording and playback device, however, has the following problem.

In a case in which a thumbnail image with about horizontal 160 pixels and about vertical 120 lines is generated from a JPEG image and displayed, for example, a DC component and an AC component are first separated in JPEG image decoding processing so as to extract only the DC component. And only the DC component is subjected to the JPEG decoding processing and to inverse quantization processing, and thereafter, the obtained data is resized to the thumbnail image size and the thumbnail-sized image is displayed. However, in addition to the case of thumbnail display, there are also cases in which the image decoded from the original JPEG image is resized to an image size (for example, 720 pixels $\times$ 480 lines, or the like) suitable for display and the resized image is displayed. In the case in which the image decoded from the JPEG image is resized to 720 pixels $\times$ 480 lines and the resized image is displayed, JPEG decoding processing and inverse quantization processing are performed on both the DC and AC components, separately of the decoding processing performed for the thumbnail display, and then the resizing to 720 pixels $\times$ 480 lines and the display of the resized image are performed. That is, the JPEG decoding processing performed in the case of the thumbnail display differs from that performed in the case of the resizing to 720 pixels $\times$ 480 lines and the display of the resized image. Therefore, it is necessary to determine which JPEG decoding processing is to be performed and then select the processing. This causes the JPEG decoding processing inside the device to become complicated.

In the case where the JPEG image is decoded to generate the thumbnail image, if the generation of the thumbnail image by the DC component extraction is not performed, the image scale-down ratio at which the original JPEG image is reduced in size to the thumbnail image becomes small, such that filtering corresponding to a wide resizing ratio (scale-down ratio) range is needed. This is particularly true when a mega-size JPEG image with a million or more pixels is decoded to generate a thumbnail image. For instance, in a case where a JPEG image with 2048 pixels × 1760 lines (3.6 million pixels) is decoded to generate and display a thumbnail image with 136 pixels × 90 lines, the required image scale-down ratio, at which the size of the original JPEG image is reduced, is 136/2048 = 1/15 to 1/16 in the horizontal direction and 1/19 to 1/20 in the vertical direction, and the resizing (scale down) within this range is needed. And to realize the filtering processing (scale-down processing) corresponding to this range, a scale-down processing circuit of considerable size, or when software processing is performed, a processing code of considerable size, is needed.

This is not limited to the scale-down processing but is true for scale-up processing. Specifically, when resizing processing and scaling processing correspond to a wide range, the size of processing circuit and the size of processing code increase in proportion to increase in the width of the range. Also, in a case where the resizing ratio (the scaling ratio) range is limited to a range within which appropriate resizing is performed, if resizing is performed, e.g., by setting a control parameter so that the resizing (the scaling) is carried out beyond that range, the quality of the display image deteriorates significantly. This goes against the trend of the present times, in which in still image display, further increase in image quality is demanded and such image quality increase is actually being realized in related items, and is thus not acceptable.

Likewise, in the case where an input image with a million or more pixels is reduced in size to a thumbnail image and the obtained image is recorded, when JPEG encoding is performed, filtering corresponding to a wide resizing ratio range is also needed and therefore a processing circuit of considerable size and a processing code of considerable size are necessary. And in this case, if a limit is imposed on the resizing ratio range, the situation which is the same as that describe above will occur.

Furthermore, when a user requests that a playback image be subjected to zoom processing, scaling processing, rotation processing and other image processing, the JPEG encoded data (the JPEG stream) is extracted again from the recording medium, and decoding processing, and zoom processing, scaling processing, rotation processing and other image processing based on stream information contained in the JPEG stream, and clipping, resizing, rotation processing and other image processing according to the user's request are performed and the obtained image is displayed. This results in deterioration in responsiveness to the user's request. Also, to meet the user's request with respect to the playback image, the final zoom processing, scaling processing, rotation processing and other image processing need to be performed with consideration given to both the image processing information on the zoom processing, the scaling processing, the rotation processing and the like contained in the encoded stream and the user's request for the zoom processing, the scaling processing, the rotation processing and the like. This causes the internal processing to become complicated.

In particular, in the case of JPEG decoding processing, the internal processing becomes complicated, because it is necessary to perform the processing on each input image having every type of sampling factor according to the image processing information contained in the JPEG stream and the image processing information in the user's request and then output and display an image having a predetermined sampling factor. For example, assume a case in which the sampling factor of an image with a first resolution is $H0 = 2$, $V0 = 2$, $H1 = 1$, $V1 = 1$, $H2 = 1$, and $V2 = 1$, the image with the first resolution is rotated 90° to the right, and the sampling factor of an image with a second resolution is $H0 = 2$, $V0 = 1$, $H1 = 1$, $V1 = 1$, $H2 = 1$, and $V2 = 1$. In this case, it is necessary to resize the image's color difference data with consideration given to the rotation. Specifically, not only the JPEG decoding processing, but also the sampling factor conversion in which the rotation processing and the like are considered need to be performed. That is, in this case, the color difference data in the image with the first resolution must be resized so that the size thereof is doubled in the horizontal direction and maintained as it is in the vertical direction. Furthermore, it is necessary to correct a phase shift in the color difference data occurring due to the 90° rotation to the right. Processing such as described above has to be considered for each input image with every kind of sampling factor, and the stream information contained in the JPEG stream and the user's request both need to be taken into account and processing corresponding to the stream information and the user's request has to be performed, before an output is finally produced. Therefore, the internal processing becomes quite complicated.

The sampling factor used herein is that defined by ISO/IEC10918-1, for example.

**SUMMARY OF THE INVENTION**

The present invention was made to overcome the problems described above, and it is therefore an object of the present invention to provide an image data processing device which is particularly capable of generating a thumbnail image from so-called mega-size input image data with a million or more pixels, for example, by performing simple processing at high speed, with the structure of the image data processing device being simple, while being capable of performing clipping processing, zoom (clipping and scaling) processing, scaling processing, rotation processing and other processing on the decoded image or the like at high speed in accordance with a user's instruction or the like.

In order to achieve the object, an inventive image data processing device for scaling up or down input image data and outputting output image data includes a first image processing section for converting the input image data with a first resolution into intermediate image data with a second resolution, and a second image processing section for converting the intermediate image data into the output image data with a third resolution.

In this manner, input image data is temporarily converted to intermediate image data, whereby the size of each image processing section and hence the entire circuit size, program size, and the like can be reduced easily. And processing speed can also be enhanced easily.

## BRIEF DESCRIPTION OF THE DRAWINGS

FIG. **1** is a block diagram illustrating the structure of an image data processing device according to a first embodiment.

FIG. **2** is an explanatory view illustrating the resolutions of input image data, intermediate image data, and output image data according to the first embodiment.

FIG. **3** is a block diagram illustrating the detailed structure of a second horizontal vertical filter **201** according to the first embodiment.

FIG. **4** is a block diagram illustrating the structure of an image data processing device according to a second embodiment.

FIG. **5** is a block diagram illustrating the structure of an image data processing device according to a third embodiment.

FIG. **6** is an explanatory view illustrating exemplary sampling factors of input image data, intermediate image data, and output image data according to the third embodiment.

## DETAILED DESCRIPTION OF THE INVENTION

Hereinafter, preferred embodiments of the present invention will be described in detail with reference to the accompanying drawings. In the following embodiments, components having the same functions are identified by the same reference numerals and the description thereof will be thus omitted herein.

(First embodiment)

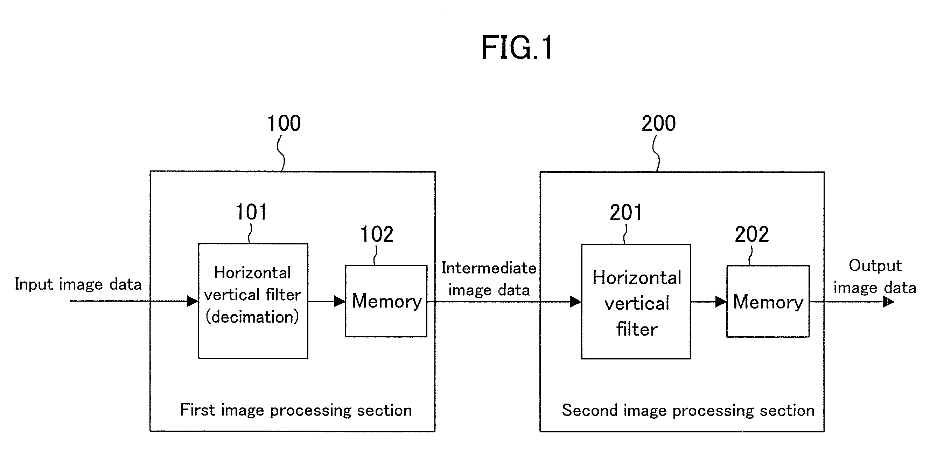

FIG. **1** is a block diagram illustrating the structure of an image data processing device according to a first embodiment of the present invention.

The image data processing device includes a first image processing section **100** and a second image processing section **200.** The first image processing section **100** includes a first horizontal vertical filter **101** and a first memory **102,** while the second image processing section **200** includes a second horizontal vertical filter **201** and a second memory **202.** Specifically, the image processing sections **100** and **200** and the like may be configured by hardware or may be configured by using a processing program and a processor for executing that program.

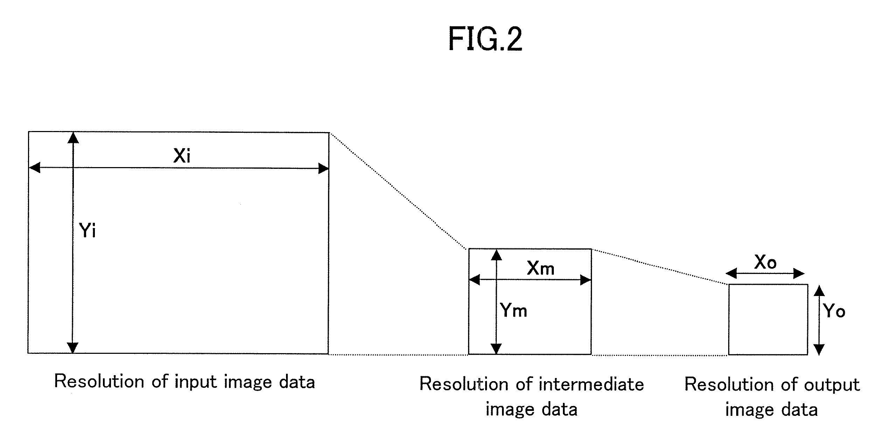

As shown in FIG. **2,** for example, the first horizontal vertical filter **101** in the first image processing section **100** converts input image data with a resolution (the number of pixels) of ($Xi \times Yi$) into intermediate image data with a resolution of ($Xm \times Ym$) by performing decimation processing and/or filtering processing, for example, and stores the intermediate image data in the first memory **102.** It should be noted that whether or not to convert the resolution ($Xi \times Yi$) of the input image data into the resolution ($Xm \times Ym$) of the intermediate image data may be set from a host CPU or the like, or may be automatically determined in accordance with the resolution of the input image data and the resolution of the intermediate image data, etc.

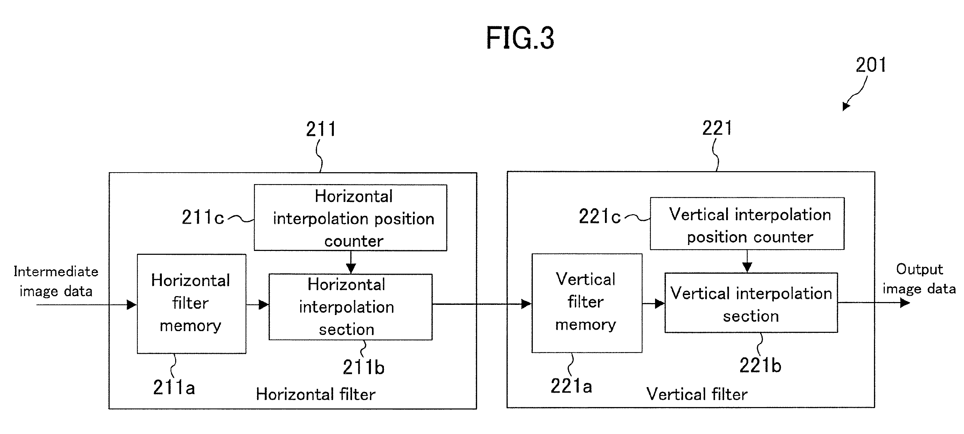

The second horizontal vertical filter **201** in the second image processing section **200** converts the intermediate image data into output image data with a resolution of ($Xo \times Yo$) by performing decimation processing and/or two-dimensional filtering processing, for example, and stores the output image data in the second memory **202.** More specifically, as shown in FIG. **3,** for example, the second horizontal vertical filter **201** includes a horizontal filter **211** and a vertical filter **221.** The horizontal filter **211** includes a horizontal filter memory **211a,** a horizontal interpolation section **211b,** and a horizontal interpolation position counter **211c,** while the vertical filter **221** includes a vertical filter memory **221a,** a vertical interpolation section **221b,** and a vertical interpolation position counter **221c.** The interpolation position counters **211c** and **221c** each retain a value (a coordinate) corresponding to 1/256 of a pixel, for example, which value indicates the position of part of the intermediate image data that corresponds to each pixel in the output image data (i.e., a value of 256 corresponds to the distance between adjacent pixels.) The interpolation sections **211b** and **221b** perform interpolation arithmetic based on the values retained by the interpolation position counters **211c** and **221c** and image data read from the filter memories **211a** and **221a** and calculate the value of output image data for each pixel. This allows the conversion to be performed with the image quality being maintained at a high level, even in a case where the scale-down ratio is not an integral multiple, for example.

The input image data described above is not limited to particular data but may be data output from an imaging camera, data read from a recording medium, or the like. Alternatively, the input image data may be so-called raw image data, data decoded from compressed or encoded image data, such as JPEG data, or the like. Furthermore, the first image processing section **100** may be designed so as to have the function of decoding and the like.

In a case where the input image data is compressed or encoded image data such as JPEG data, the first image processing section may perform decoding processing and also perform zoom processing, scaling processing, and rotation processing based on image information, such as resizing information, and rotation information, contained in the JPEG stream.

Also, the resolution (Xo × Yo) of the output image data may be supplied from outside the device, or a fixed resolution may be set in advance. Likewise, the resolution (Xm × Ym) of the intermediate image data may also be supplied from outside the device, or a fixed resolution may be set in advance. Alternatively, the resolution (Xm × Ym) may be automatically determined based on the resolutions of the input image data and output image data and the like.

The capacities of the memories **102** and **202** may be changeably set from the host CPU or the like.

It will be described how the image data processing device thus structured performs exemplary operation, in which from 5120 × 3840 pixel input image data, 720 × 480 pixel (so-called D1) output image data for normal display, and 160 × 120 pixel or 136 × 90 pixel output image data for thumbnail display are generated, for example.

First, the input image data input into the first image processing section **100** is subjected to decimation processing and filtering processing performed by the first horizontal vertical filter **101,** so that the size of the input image data in the vertical direction is reduced to one half by the decimation processing and then the size thereof in the horizontal direction and the size thereof in the vertical direction are reduced to one quarter and one half, respectively, by the filtering processing. As a result, the input image data is converted into 1280 × 960 pixel intermediate image data, which is stored in the first memory **102**. In addition to the above processing, processing for clipping an image in a desired position in the input image data may also be performed.

The intermediate image data is then successively read by the second horizontal vertical filter **201** in the second image processing section **200** and the read data is converted into output image data having an arbitrary image size, such as 720 × 480 or 160 × 120 pixels, or having a fixed image size set in advance. The obtained output image data is stored in the second memory **202** and read in accordance with display timing, etc., in a display device (not shown), and the read data is output. To be specific, the horizontal filter **211** performs the following operation, for example.

First, the horizontal interpolation position counter **211c** is initialized. By setting a predetermined value as this initialization value, for example, it is possible to perform so-called zoom processing in which an image in a desired position in the intermediate image data is clipped and scaled up or down. Thereafter, the horizontal interpolation section **211b** calculates the value of each pixel in the output image data, based on the value of the horizontal interpolation position counter **211c** and image data read from the filter memory **211a** in accordance with the value of the horizontal interpolation position counter **211c.** More specifically, if the position of a pixel in the output image data corresponds to the position of the midpoint between two pixels in the intermediate image data, for example, the average of the values of the two pixels can be obtained by interpolation. Next, $256 \times Xi/Xo$ is added to the value of the horizontal interpolation position counter **211c,** whereby the value of the horizontal interpolation position counter **211c** is updated to a position in the intermediate image data that corresponds to the next pixel in the output image data. By repeating the same process for the Xo pixels, horizontal resizing (and clipping in the horizontal direction) for one line is performed. And by repeating the above process for the Xi lines, horizontal resizing for one screen is performed.

Subsequently, the vertical filter **221** performs similar operation, whereby an image further resized in the vertical direction is obtained.

As described above, when input image data with various resolutions is converted into output image data with a resolution corresponding to a display device or the like, the input image data is temporarily converted into intermediate image data with an intermediate resolution between the resolutions of the input image data and output image data, whereby the circuit size (and/or the processing program) can be reduced. Specifically, in a case where the resolution of the input image data is converted to the resolution of the output image data by a single conversion, the circuit size and the like are likely to be increased due to a large scale-down ratio (a resolution conversion ratio). In contrast, when the resolution of the input image data is converted to the resolution of the output image data in multiple stages, it is possible to reduce the size of each conversion circuit, thereby easily reducing the entire circuit size and the like. In addition, the processing speed can be enhanced easily.

Because of diversity of distribution data and the like, the resolution of the input image data may be various, and the resolution of the output image data, though limited to some extent depending on the type of a display device and the like, may also be various. Examples of the resolution of the output image data include so-called D1 (horizontal 720 pixels × vertical 480 lines), VGA (horizontal 640 pixels × vertical 480 lines), a resolution for thumbnail display, and the like. Considering combinations of these input and output image data resolutions, it is necessary to make it possible to perform conversions at a considerable number of scaling ratios. Therefore, attempts to make it possible to perform each of the conversions at all of the scaling ratios by a single stage will result in increases in the circuit size and hence in the manufacturing costs. In contrast, if, for example, the resolution of the intermediate image data is set to one type or a few types, such as the above-mentioned D1, SXGA (horizontal 1280 pixels × vertical 960 lines), and the like, it is possible to reduce the number of scaling ratios at which conversions are made, thereby allowing the circuit size to be reduced easily.

In particular, in a case where the resolution of the intermediate image data and the resolution of the output image data are each set to one type, for example, it is enough to merely make the scaling ratio of the first horizontal vertical filter **101** variable and make the second horizontal vertical filter **201** capable of performing one type of resolution conversion processing. Therefore, the second horizontal vertical filter **201** may be easily configured by a cascade connection of a horizontal one-dimensional linear filter and a vertical one-dimensional linear filter, for example.

Even in the above-described case in which the resolution conversion process is divided into multiple stages, a certain number of scaling ratios at which the input image data is converted into the intermediate image data is required. Therefore, where the first horizontal vertical filter **101** is configured by a horizontal vertical two-dimensional filter or by a combination of a horizontal one-dimensional linear filter and a vertical one-dimensional linear filter, the circuit size and the processing time are also increased to a certain degree. Nevertheless, as compared with the case of the single-stage conversion, the circuit size and the processing time can be reduced easily. Furthermore, in the case in which simple vertical horizontal decimation processing is employed as described above, the circuit size and processing time of the first image processing section **100** can be easily reduced more significantly. It was confirmed by subjective image evaluation performed by the present inventors that if relation between the resolution of the input image data and the resolution of the intermediate image data is set appropriately, aliasing errors are suppressed to such a degree that they cannot be detected by human visual response even in the case where resolution conversion is performed by simple decimation processing. Specifically, by setting simple and highly flexible processing in the first stage and highly precise processing in the second stage, for example, it is possible to easily achieve flexible scaling ratios with the circuit size being small.

To be specific, when the resolution of the output image data is set to the resolution of the above-described D1 to VGA, for example, it is appropriate to set the resolution of the intermediate image data to a resolution varying in the range of D1 to SXGA or the like, but the resolution of the intermediate image data is not limited to resolutions in this range and may be set to various resolutions in accordance with the resolutions of the input image data and output image data and the like.

The resolution of the intermediate image data does not always have to be between the resolution of the input image data and the resolution of the output image data (that is, ($Xi \geq Xm$ or $Yi \geq Ym$) and ($Xm \geq Xo$ or $Ym \geq Yo$), for example). The resolution of the intermediate image data may be significantly scaled down and then scaled up, so long as the degree of deterioration in the resultant image is acceptable. Also, the resolution of the intermediate image data may be scaled up and then scaled down. Furthermore, in a case where the scaling ratio is within a predetermined range, for example, a single-stage conversion may be made by either the image processing section **100** or **200** alone. Moreover, the present invention is not limited to the case in which the output image data is finally scaled down, but the output image data may be finally scaled up.

The horizontal vertical filters **101** and **102** are not limited to those that perform decimation or interpolation as described above, but in cases where the horizontal vertical filters **101** and **102** make various types of conversions, it is also possible to easily achieve circuit-size reduction and the like by dividing conversion process into multiple stages.

Moreover, the decimation and other processing may be performed only in the vertical direction or in the horizontal direction.

The memories **102** and **202** do not necessarily have to be provided, if image data is input/output at the appropriate times. However, for example, if intermediate image data generated for thumbnail display is stored in the first memory **102** and then, based on the stored intermediate image data, the second image processing section **200** generates output image data for normal display or output image data obtained by clipping a certain area according to a user's instruction and the like, the output image data can be easily displayed at still higher speed without requiring a decoding operation and the like.

The first memory **102** does not necessarily have to store all of the intermediate image data output from the first horizontal vertical filter **101.** For example, the first memory **102** may store only part of the intermediate image data in accordance with, e.g., an instruction given, based on the capacity of the first memory **102,** from the host CPU external to the image data processing device. Specifically, when an image clipping or a zoom is performed, data that is to be used for actual display and the like may be only stored.

(Second embodiment)

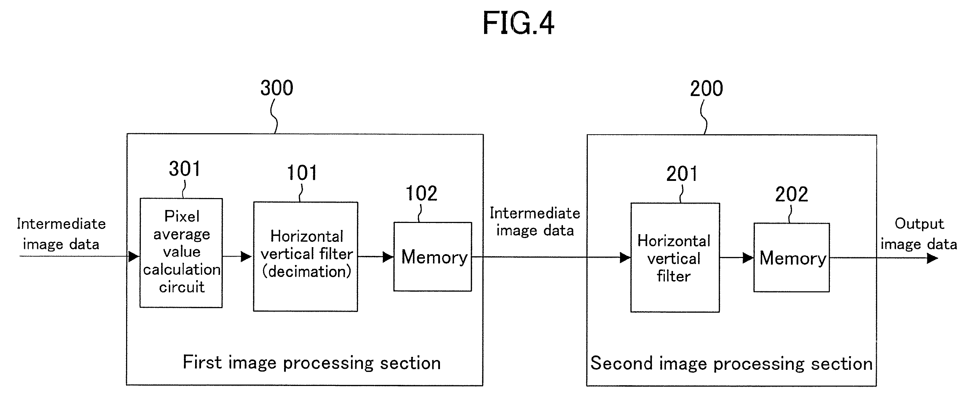

FIG. **4** is a block diagram illustrating the structure of an image data processing device according to a second embodiment of the present invention.

This image data processing device includes a first image processing section **300,** in which a pixel average value calculation circuit **301** is added to the first image processing section **100** of the first embodiment. It should be noted that the pixel average value calculation circuit **301** may be provided in place of the first horizontal vertical filter **101.**

The pixel average value calculation circuit **301** calculates, e.g., the average of luminance values and the average of color difference values in each input image data with $8 \times 8 = 64$ pixels and uses the obtained averages for data corresponding to a single pixel, thereby converting the input image data into image data with a resolution of $(Xi/8 \times Yi/8)$.

In this image data processing device, in a case in which a designated scale-down ratio is equal to or less than 1/8 ($Xi/8 \geq Xo$ or $Yi/8 \geq Yo$), the pixel average value calculation circuit **301** makes a conversion based on the average calculation and thereafter, if necessary, the first horizontal vertical filter **101** makes a conversion, and then, if necessary, the second horizontal vertical filter **201** makes a conversion, whereby output image data scaled down at the designated scale-down ratio is generated.

In a case where the designated scale-down ratio is greater than 1/8, the pixel average value calculation circuit **301** outputs the input image data as it is, and only the first horizontal vertical filter **101** and/or the second horizontal vertical filter **201** make conversion at the designated scale-down ratio.

Either the pixel average value calculation circuit **301** or the first horizontal vertical filter **101** or both of them may be operated in accordance with the scale-down ratio and the like.

The present invention is not limited to the average calculation for $8 \times 8$ pixels, but the average calculation may be performed for a different number of pixels, or multiple numbers of pixels may be selectively switched and the average calculation may be performed for the selected number of pixels.

Also, in a case where image data subjected to a DCT conversion (a discrete cosine transform) is input as input image data, for example, the DCT coefficient of the direct-current component of the DCT-converted image data may be used instead of the average calculation performed by the pixel average value calculation circuit **301.**

(Third embodiment)

A description will be made of an exemplary case in which, instead of or together with scaling process, sampling factor conversion, rotation and other image processing are performed in multiple stages.

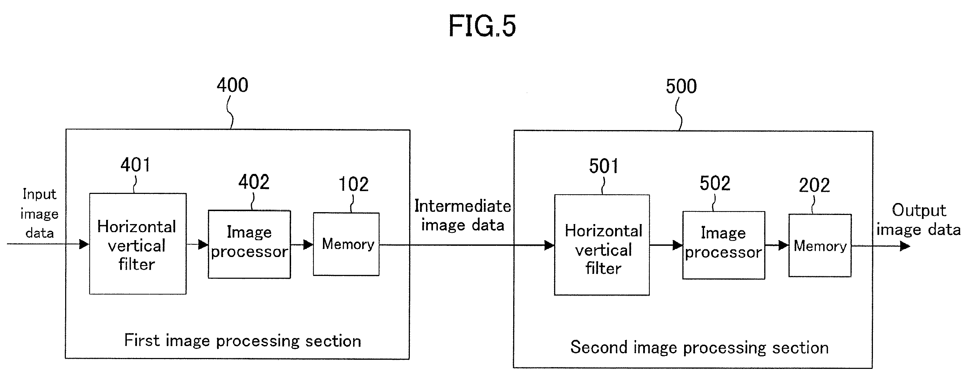

FIG. **5** is a block diagram illustrating the structure of an image data processing device according to a third embodiment of the present invention.

The image data processing device includes a first image processing section **400** and a second image processing section **500.** The first image processing section **400** includes a first horizontal vertical filter **401,** a first image processor **402,** and a first memory **102,** while the second image processing section **500** includes a second horizontal vertical filter **501,** a second image processor **502,** and a second memory **202.**

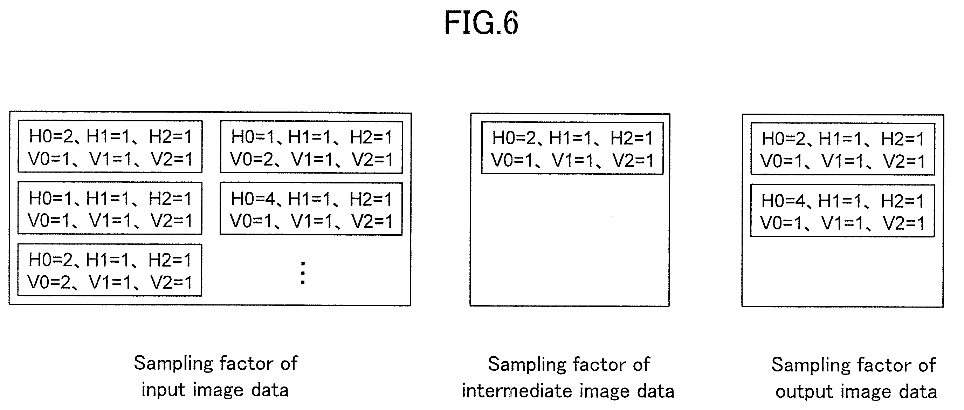

The horizontal vertical filters **401** and **501** each perform a sampling factor conversion, that is, resize a luminance component and a color difference component. Specifically, as shown in FIG. **6,** for example, the first horizontal vertical filter **401** converts input image data having various sampling factors to intermediate image data having the following sampling factor:

$$H0 = 2, V0 = 1, H1 = 1, V1 = 1, H2 = 1, \text{ and } V2 = 1.$$

The second horizontal vertical filter **501** outputs the intermediate image data as it is, or converts the intermediate image data to output image data having the following sampling factor:

$$H0 = 4, V0 = 1, H1 = 1, V1 = 1, H2 = 1, \text{ and } V2 = 1$$

and outputs the obtained output image data.

The image processors **402** and **502** perform rotation processing (clockwise rotation, counterclockwise rotation, lateral inversion, or the like) and clipping processing instructed from a host CPU or the like, for example. More specifically, the first image processor **402** performs rotation processing according to rotation information contained in stream data in which input image data is generated, while the second image processor **502** performs rotation processing in accordance with a user's instruction or operation, for example.

In the case where the image processors **402** and **502** perform the rotation processing, the horizontal vertical filters **401** and **501** perform sampling factor conversion corresponding to the rotation processing. That is, the horizontal vertical filters **401** and **501** perform conversion, in which a phase shift in the color difference component is corrected so as to achieve a predetermined sampling factor, after the rotation processing is performed.

It will be described how the image data processing device having the above-described structure operates in an exemplary case, in which when the sampling factor of input image data is

$$H0 = 2, V0 = 2, H1 = 1, V1 = 1, H2 = 1, \text{ and } V2 = 1,$$

for example,
the input image data is rotated 90° to the right (clockwise) based on rotation information in the stream data and is further rotated 90° to the left (counterclockwise) according to a user's instruction or operation, and then converted to output image data whose sampling factor is

$$H0 = 4, V0 = 1, H1 = 1, V1 = 1, H2 = 1, \text{ and } V2 = 1.$$

First, the first horizontal vertical filter **401** resizes the color difference component in the input image data whose sampling factor is

$$H0 = 2, V0 = 2, H1 = 1, V1 = 1, H2 = 1, \text{ and } V2 = 1$$

with consideration given to the subsequent rotation processing, that is, the first horizontal vertical filter **401** performs processing for doubling the size in the horizontal direction and maintaining the original size in the vertical direction (i.e., processing for doubling the number of pixels for the color component in the horizontal direction). Next, the first image processor **402** carries out processing for rotating the image data 90° to the right. By this processing, the rotation according to the rotation information in the stream data is performed, thereby generating intermediate image data whose sampling factor is

$$H0 = 2, V0 = 1, H1 = 1, V1 = 1, H2 = 1, \text{ and } V2 = 1.$$

And the generated intermediate image data is stored in the first memory **102.**

Thereafter, the second horizontal vertical filter **501** likewise resizes the color difference component in the intermediate image data with consideration given to the subsequent rotation processing, that is, the second horizontal vertical filter **501** performs processing for doubling the size in the horizontal direction and decreasing the size in the vertical direction by a factor of 4 (i.e., processing for doubling the number of pixels for the color component in the horizontal direction and for decreasing the number of pixels for the color component in the vertical direction by a factor of 4). Then, the second image processor **502** carries out processing for rotating the image data 90° to the left. By this processing, the rotation corresponding to the user's instruction, operation, or the like is performed, thereby outputting output image data whose sampling factor is

$$H0 = 4, V0 = 1, H1 = 1, V1 = 1, H2 = 1, \text{ and } V2 = 1.$$

As described above, the intermediate image data having one predetermined type of sampling factor or a few predetermined types of sampling factors is temporarily generated, whereby even if there are many combinations of the sampling factors of the input image data and output image data, it is possible to reduce the number of conversion patterns necessary for conversion. In particular, in a case where processing such as image rotation is also performed, conversion patterns corresponding to respective types of rotation (rotation angle, etc.) and the like are further needed. In such a case, the effect of reducing the number of patterns is enhanced further.

Moreover, as described previously, the intermediate image data subjected to the sampling factor conversion and the rotation processing is temporarily stored in the first memory **102,** and the stored intermediate image data is subjected to the rotation processing according to the user's instruction, operation or the like, whereby highly responsive display is easily achieved. In particular, when input image data is data decoded from compressed image data, time required for a decoding process is not necessary. In addition, when processing performed by the first image processing section **400** is accompanied by image scale-down, it is possible to reduce the capacity necessary for the first memory **102.**

It should be noted that the sampling factors of the intermediate image data and output image data are not limited to those described above. Furthermore, although in the above-described exemplary case, the intermediate image data and the output image data have one or two types of sampling factors, the present invention is not limited to the exemplary case, and the number of types of sampling factors may be one, or three or more.

Also, although in the above-described exemplary case, the rotation processing is performed together with the sampling factor conversion, the present invention is not limited to this, but only either the rotation processing or the sampling factor conversion may be perfumed, and image clipping processing and the like may also be performed.

Furthermore, the components and the functions described in the foregoing embodiments may be combined in various ways, so long as the combinations are theoretically possible. To be specific, image scaling processing such as described in the first embodiment and sampling factor conversion and/or rotation or other image processing such as described in the third embodiment may be combined and performed in combination, for example. Also, the image scale-down method using the average calculation described in the second embodiment may be applied to the third embodiment.

It should be also noted that the image scaling processing is not limited to processing using decimation and interpolation such as described above, for example, but various other methods may be applied.

As described above, the inventive image data processing devices are particularly capable of generating a thumbnail image from so-called mega-size input image data with a million or more pixels, for example, by performing simple processing at high speed, with the structures of the image data processing devices being simple. Also, the inventive image data processing devices are capable of performing zoom (clipping) processing, scaling processing, rotation processing and other processing on the decoded images and the like at high speed in accordance with user's instructions or the like and thus effectively function as image data processing devices and the like that are applied, e.g., to still image recording and playback devices, such as digital cameras and camera cell phones, in which image data is encoded and decoded.

## Claims

1. An image data processing device for scaling up or down input image data and outputting output image data, the device comprising:

   a first image processing section for converting the input image data with a first resolution into intermediate image data with a second resolution, and
   a second image processing section for converting the intermediate image data into the output image data with a third resolution.

2. The image data processing device of Claim 1, wherein the second and third resolutions are fixed resolutions each set in advance.

3. The image data processing device of Claim 1, wherein each of the first and second image processing sections performs at least either pixel decimation processing or vertical-horizontal filtering processing, thereby performing the resolution conversion.

4. The image data processing device of Claim 1, wherein when a scale-down ratio of the output image data to the input image data is smaller than a predetermined scale-down ratio, the first image processing section performs the resolution conversion at the predetermined scale-down ratio.

5. The image data processing device of Claim 4, wherein the predetermined scale-down ratio is 1/8 both in an image horizontal direction and in an image vertical direction.

6. The image data processing device of Claim 5, wherein for each of 8 × 8 pixel rectangular areas in the input image data, the first image processing section calculates an average of values of pixels in the rectangular area as a value of a pixel in the intermediate image data.

7. The image data processing device of Claim 6, wherein when the input image data is image data in a form of DCT coefficients, the first image processing section obtains a direct-current component of the DCT coefficients as a value of a pixel in the intermediate image data.

8. The image data processing device of Claim 1, wherein the intermediate image data has a size that is set variably and a maximum value of the size is 1280 pixels in an image horizontal direction and 960 pixels in an image vertical direction.

9. The image data processing device of Claim 1, wherein at least either the first or second image processing section is designed so as to further perform at least either processing for clipping a certain area or rotation processing.

10. The image data processing device of Claim 1, wherein the input image data is data obtained by decoding information-encoded image data that contains at least either image resizing information or image rotation information, and the first image processing section is designed so as to perform scale-up or scale-down processing, or rotation processing based on the image resizing information or the image rotation information.

11. The image data processing device of Claim 1, wherein the second image processing section is designed so as to perform clipping processing, scale-up or scale-down processing, or rotation processing based on at least one of image clipping area information, image resizing information and image rotation information designated by a user.

12. The image data processing device of Claim 1, wherein whether or not the first image processing section performs the resolution conversion can be controlled from outside the image data processing device.

13. The image data processing device of Claim 1, further comprising a memory for retaining the intermediate image data.

14. The image data processing device of Claim 13, wherein the memory has a capacity that is set variably in accordance with an instruction given from outside the image data processing device.

15. The image data processing device of Claim 13, wherein the second image processing section is designed so as to be capable of performing clipping processing, scale-up or scale-down processing, or rotation processing on the intermediate image data retained by the memory, in a plurality of ways.

16. The image data processing device of Claim 1, wherein each of the input image data, the intermediate image data, and the output image data is image data that contains a predetermined sampling factor in which luminance data and color difference data are contained, and
at least either the first or second image processing section is designed so as to further perform rotation processing and correct a phase shift in the color difference data occurring due to the rotation processing.

17. The image data processing device of Claim 16, wherein the first and second image processing sections are designed so as to perform scale-up or scale-down processing on the luminance data and the color difference data at different scale-up or scale-down ratios, thereby converting the sampling factor.

18. The image data processing device of Claim 16, wherein each of the input image data, the intermediate image data, and the output image data is image data that is expressed by a YCbCr color system; and
where a horizontal sampling factor for luminance Y is H0,
a vertical sampling factor for the luminance Y is V0,
a horizontal sampling factor for color difference Cb is H1,
a vertical sampling factor for the color difference Cb is V1,
a horizontal sampling factor for color difference Cr is H2, and
a vertical sampling factor for the color difference Cr is V2,
the first image processing section converts the input image data into the intermediate image data having a sampling factor in which $H0 = 2$, $V0 = 1$, $H1 = 1$, $V1 = 1$, $H2 = 1$, and $V2 = 1$.

19. The image data processing device of Claim 16, wherein each of the input image data, the intermediate image data, and the output image data is image data that is expressed by a YCbCr color system; and
where a horizontal sampling factor for luminance Y is H0,
a vertical sampling factor for the luminance Y is V0,
a horizontal sampling factor for color difference Cb is H1,
a vertical sampling factor for the color difference Cb is V1,
a horizontal sampling factor for color difference Cr is H2, and

a vertical sampling factor for the color difference Cr is V2,

the second image processing section converts the intermediate image data into the output image data having a sampling factor in which H0 = 2, V0 = 1, H1 = 1, V1 = 1, H2 = 1, and V2 = 1, or H0 = 4, V0 = 1, H1 = 1, V1 = 1, H2 = 1, and V2 = 1.

# FIG.1

# FIG.2

Resolution of input image data

Resolution of intermediate image data

Resolution of output image data

EP 1 765 000 A2

# FIG.3

# FIG.4

Intermediate image data → **300** First image processing section: **301** Pixel average value calculation circuit → **101** Horizontal vertical filter (decimation) → **102** Memory → Intermediate image data → **200** Second image processing section: **201** Horizontal vertical filter → **202** Memory → Output image data

## FIG.5

First image processing section (400):
- 401: Horizontal vertical filter
- 402: Image processor
- 102: Memory

Input image data → First image processing section → Intermediate image data

Second image processing section (500):
- 501: Horizontal vertical filter
- 502: Image processor
- 202: Memory

Intermediate image data → Second image processing section → Output image data

EP 1 765 000 A2

# FIG.6

| | |
|---|---|
| H0=2、H1=1、H2=1<br>V0=1、V1=1、V2=1 | H0=1、H1=1、H2=1<br>V0=2、V1=1、V2=1 |
| H0=1、H1=1、H2=1<br>V0=1、V1=1、V2=1 | H0=4、H1=1、H2=1<br>V0=1、V1=1、V2=1 |
| H0=2、H1=1、H2=1<br>V0=2、V1=1、V2=1 | ⋮ |

Sampling factor of
input image data

| |
|---|
| H0=2、H1=1、H2=1<br>V0=1、V1=1、V2=1 |

Sampling factor of
intermediate image data

| |
|---|
| H0=2、H1=1、H2=1<br>V0=1、V1=1、V2=1 |
| H0=4、H1=1、H2=1<br>V0=1、V1=1、V2=1 |

Sampling factor of
output image data

EP 1 765 000 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000059612 A